# EUROPEAN PATENT APPLICATION

(11) **EP 4 742 758 A1**
(43) Date of publication of application: **13.05.2026**
(21) Application number: 24816695.1
(22) Date of filing: 26.09.2024
(51) Int. Cl.: H04W 36/08, H04W 76/15, H04W 36/02, H04W 84/12, H04W 92/12

(54) **PACKET TRANSMISSION METHODS AND APPARATUSES, AND DEVICE**

(71) Applicant: New H3C Technologies Co., Ltd., Hangzhou, Zhejiang 310052 (CN)
(72) Inventor: GONG, Dafu, Beijing 100102 (CN)
(74) Representative: 2SPL Patentanwälte PartG mbB
(86) International application number: PCT/CN2024/121547
(87) International publication number: WO 2026/065063

(57) **Abstract**

The present disclosure a packet transmission method, apparatus and device. The method includes: sending radio frequency information of a neighbor AP of the first AP to the first AP such that the first AP broadcasts a beacon packet carrying the radio frequency information of the first AP and the radio frequency information of the neighbor AP; wherein the beacon packet is configured to indicate a wireless terminal for accessing the first AP later to establish a first wireless link with the first AP based on the radio frequency information of the first AP, and establish a second wireless link with the neighbor AP based on the radio frequency information of the neighbor AP; receiving a first data packet from the first AP and a second data packet from the neighbor AP; and sending the first data packet or the second data packet. According to the present disclosure, interruption of transmission process of the data packets is avoided, thereby improving the user experience. For the reconnection process of the roam, in order to ensure roam continuity, the wireless terminal has no perception for the reconnection process, maintaining service uninterrupted.

## Description

### TECHNICAL FIELD

The present disclosure relates to the field of communication technologies and in particular to a packet transmission method, apparatus and device.

### BACKGROUND

A Wireless Local Area Network (WLAN) may include an Access Controller (AC) and a plurality of Access Points (AP).

When a wireless terminal is under the coverage of an AP1, the wireless terminal establishes a wireless link with the AP1. The wireless terminal sends data packets to the AP1 over the wireless link, and receives data packets from the AP1 over the wireless link. When the wireless terminal roams, that is, when the wireless terminal roams from the coverage of the AP1 to the coverage of an AP2, the wireless terminal needs to reestablish a wireless link with the AP2. The wireless terminal sends data packets to the AP2 over the wireless link and receives data packets from the AP2 over the wireless link.

### SUMMARY

According to an embodiment of the present disclosure, there is provided a packet transmission method, performed by an access controller (AC) and including:
for any first access point (AP) in a plurality of APs under the management of the AC, sending radio frequency information of a neighbor AP of the first AP to the first AP such that the first AP broadcasts a beacon packet carrying the radio frequency information of the first AP and the radio frequency information of the neighbor AP; where the beacon packet is configured to indicate a wireless terminal for accessing the first AP later to establish a first wireless link with the first AP based on the radio frequency information of the first AP, and establish a second wireless link with the neighbor AP based on the radio frequency information of the neighbor AP; where the radio frequency information of the first AP is different from the radio frequency information of the neighbor AP;
receiving a first data packet from the first AP and a second data packet from the neighbor AP, where the first data packet is sent to the first AP by the wireless terminal based on the first wireless link, and the second data packet is sent to the neighbor AP by the wireless terminal based on the second wireless link; where the first data packet and the second data packet carry same load contents; and
sending the first data packet or the second data packet.

According to an embodiment of the present disclosure, there is provided a packet transmission method, performed by an access point (AP) and including:
receiving radio frequency information of a neighbor AP of the AP from an access controller (AC) accessed by the AP;
broadcasting a beacon packet to a wireless terminal, where the beacon packet includes radio frequency information of the AP and the radio frequency information of the neighbor AP; the beacon packet is configured to indicate the wireless terminal for accessing the AP later to establish a first wireless link with the AP based on the radio frequency information of the AP and establish a second wireless link with the neighbor AP based on the radio frequency information of the neighbor AP; where the radio frequency information of the AP is different from the radio frequency information of the neighbor AP;
receiving, based on the first wireless link, a first data packet from the wireless terminal; and
sending the first data packet to the AC.

According to an embodiment of the present disclosure, there is provided a packet transmission method, performed by a wireless terminal and including:
receiving a beacon packet broadcast by a first access point (AP), where the beacon packet includes radio frequency information of the first AP and radio frequency information of a neighbor AP of the first AP;
in response to the wireless terminal being to access the first AP, establishing a first wireless link with the first AP based on the radio frequency information of the first AP;
establishing a second wireless link with the neighbor AP based on the radio frequency information of the neighbor AP; and
sending a first data packet to the first AP through the first wireless link, and sending a second data packet to the neighbor AP through the second wireless link; where the first data packet and the second data packet carry same load contents.

According to an embodiment of the present disclosure, there is provided a packet transmission apparatus, applied to an access controller (AC) and including:
a sending module, configured to: for any first access point (AP) in a plurality of APs under the management of the AC, send radio frequency information of a neighbor AP of the first AP to the first AP such that the first AP broadcasts a beacon packet carrying the radio frequency information of the first AP and the radio frequency information of the neighbor AP; where the beacon packet is configured to indicate a wireless terminal for accessing the first AP later to establish a first wireless link with the first AP based on the radio frequency information of the first AP, and establish a second wireless link with the neighbor AP based on the radio frequency information of the neighbor AP; where the radio frequency information of the first AP is different from the radio frequency information of the neighbor AP;
a receiving module, configured to receive a first data packet from the first AP and a second data packet from the neighbor AP, where the first data packet is sent to the first AP by the wireless terminal based on the first wireless link, and the second data packet is sent to the neighbor AP by the wireless terminal based on the second wireless link; where the first data packet and the second data packet carry same load contents; and
a processing module, configured to send the first data packet or the second data packet.

According to an embodiment of the present disclosure, there is provided a packet transmission apparatus, applied to an access point (AP) and including:
a first receiving module, configured to receive radio frequency information of a neighbor AP of the AP from an access controller (AC) accessed by the AP;
a first sending module, configured to broadcast a beacon packet to a wireless terminal, where the beacon packet includes radio frequency information of the AP and the radio frequency information of the neighbor AP; the beacon packet is configured to indicate the wireless terminal for accessing the AP later to establish a first wireless link with the AP based on the radio frequency information of the AP and establish a second wireless link with the neighbor AP based on the radio frequency information of the neighbor AP; where the radio frequency information of the AP is different from the radio frequency information of the neighbor AP;
a second receiving module, configured to receive, based on the first wireless link, a first data packet from the wireless terminal; and
a second sending module, configured to send the first data packet to the AC.

According to an embodiment of the present disclosure, there is provided a packet transmission apparatus, applied to a wireless terminal and including:
a receiving module, configured to receive a beacon packet broadcast by a first access point (AP), where the beacon packet includes radio frequency information of the first AP and radio frequency information of a neighbor AP of the first AP;
an establishing module, configured to: in response to the wireless terminal being to access the first AP, establish a first wireless link with the first AP based on the radio frequency information of the first AP; and establish a second wireless link with the neighbor AP based on the radio frequency information of the neighbor AP; and
a sending module, configured to send a first data packet to the first AP through the first wireless link, and send a second data packet to the neighbor AP through the second wireless link; where the first data packet and the second data packet carry same load contents.

According to an embodiment of the present disclosure, there is provided an electronic device, including a processor and a memory storing instructions executable by the processor, where the instructions, when executed by the processor, cause the processor to perform the packet transmission method according to any one of the embodiments of the present disclosure.

According to an embodiment of the present disclosure, there is provided an access controller, including a processor and a memory storing instructions executable by the processor, where the instructions, when executed by the processor, cause the processor to perform the packet transmission method according to any one of the embodiments of the present disclosure.

According to an embodiment of the present disclosure, there is provided an access point, including a processor and a memory storing instructions executable by the processor, where the instructions, when executed by the processor, cause the processor to perform the packet transmission method according to any one of the embodiments of the present disclosure.

According to an embodiment of the present disclosure, there is provided a wireless terminal, including a processor and a memory storing instructions executable by the processor, where the instructions, when executed by the processor, cause the processor to perform the packet transmission method according to any one of the embodiments of the present disclosure.

According to an embodiment of the present disclosure, there is provided a computer program product, including computer programs, where the computer programs, when executed by a processor, cause the processor to perform the packet transmission method according to any one of the embodiments of the present disclosure.

According to an embodiment of the present disclosure, there is provided a machine-readable storage medium, storing machine-executable instructions executable by a processor, where the machine-executable instructions, when executed by the processor, cause the processor to perform the packet transmission method according to any one of the embodiments of the present disclosure.

From the above technical solution, it can be seen that in the embodiments of the present disclosure, a beacon packet broadcast by the first AP includes radio frequency information of the first AP and radio frequency information of a neighbor AP of the first AP such that the wireless terminal can establish a wireless link with the first AP based on the radio frequency information of the first AP and establish a wireless link with the neighbor AP based on the radio frequency information of the neighbor AP, that is, the wireless terminal can establish a wireless link with a plurality of APs at the same time. In a roaming process of the wireless terminal, when the wireless terminal roams from the coverage of the first AP to the coverage of the neighbor AP, the wireless terminal does not need to reestablish a wireless link with the neighbor AP, so as to avoid interruption of transmission process of the data packets. Thus, the wireless terminal can continuously send data packets and receive data packets, thereby improving the user experience. For the reconnection process of the roam, in order to ensure roam continuity, the wireless terminal has no perception for the reconnection process, maintaining service uninterrupted.

### BRIEF DESCRIPTION OF THE DRAWINGS

FIG.1A is a schematic flowchart illustrating a packet transmission method according to an embodiment of the present disclosure.
FIG.1B is a schematic flowchart illustrating a packet transmission method according to an embodiment of the present disclosure.
FIG.1C is a schematic flowchart illustrating a packet transmission method according to an embodiment of the present disclosure.
FIG. 2 is a schematic diagram illustrating WLAN networking according to an embodiment of the present disclosure.
FIG.3 is a schematic flowchart illustrating a packet transmission method according to an embodiment of the present disclosure.
FIG. 4 is a schematic diagram illustrating a wireless terminal establishing a wireless link with a plurality of APs according to an embodiment of the present disclosure.
FIG. 5 is a schematic diagram illustrating a roaming process of a wireless terminal according to an embodiment of the present disclosure.
FIG. 6A is a structural schematic diagram illustrating a packet transmission apparatus according to an embodiment of the present disclosure.
FIG. 6B is a structural schematic diagram illustrating a packet transmission apparatus according to an embodiment of the present disclosure.
FIG. 6C is a structural schematic diagram illustrating a packet transmission apparatus according to an embodiment of the present disclosure.
FIG. 7A is a structural diagram illustrating hardware of an AC according to an embodiment of the present disclosure.
FIG. 7B is a structural diagram illustrating hardware of an AP according to an embodiment of the present disclosure.
FIG. 7C is a structural diagram illustrating hardware of a wireless terminal according to an embodiment of the present disclosure.

### DETAILED DESCRIPTION OF THE EMBODIMENTS

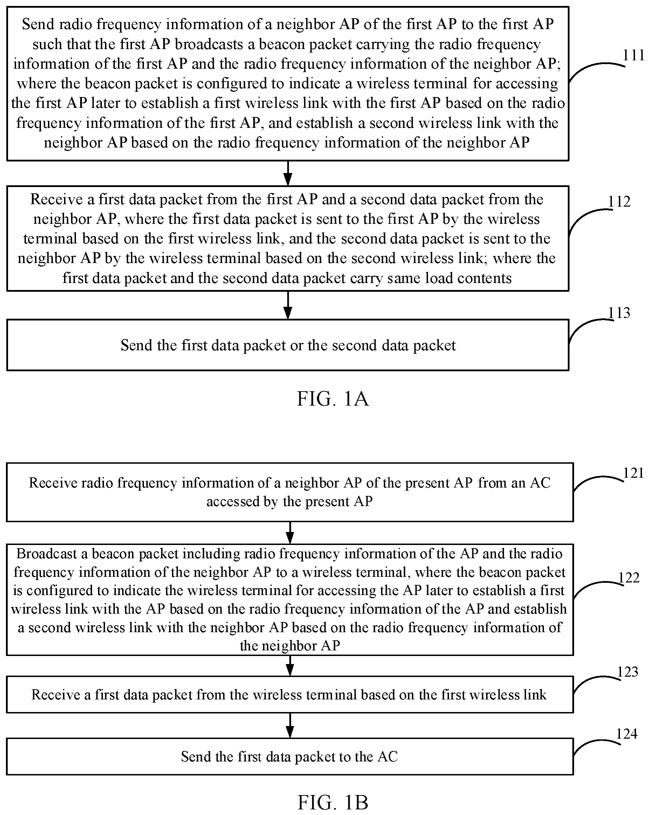

**An** embodiment of the present disclosure provides a packet transmission method, which is applied to an Access Controller (AC) which manages a plurality of Access Points (APs), where any AP of the plurality of APs is referred to as a first AP and the AC determines a neighbor AP of the first AP from a plurality of APs under its management. With reference to FIG. 1A, it is a schematic flowchart of the method. The method may include the following steps 111 to 113.

At step 111, radio frequency information of the neighbor AP of the first AP is sent to the first AP such that the first AP broadcasts a beacon packet carrying radio frequency information of the first AP and the radio frequency information of the neighbor AP. The beacon packet is configured to indicate a wireless terminal for accessing the first AP later to establish a first wireless link with the first AP based on the radio frequency information of the first AP, and establish a second wireless link with the neighbor AP based on the radio frequency information of the neighbor AP; the radio frequency information of the first AP is different from the radio frequency information of the neighbor AP.

At step 112, a first data packet from the first AP and a second data packet from the neighbor AP are received. The first data packet is sent to the first AP by the wireless terminal based on the first wireless link; the second data packet is sent to the neighbor AP by the wireless terminal based on the second wireless link; the first data packet and the second data packet carry same load contents.

At step 113, the first data packet or the second data packet is sent.

An embodiment of the present disclosure provides a packet transmission method. The method may be applied to an AP. With reference to FIG. 1B, it is a schematic flowchart of the method. The method may include the following steps 121 to 124.

At step 121, radio frequency information of a neighbor AP of the present AP is received from an AC accessed by the present AP.

At step 122, a beacon packet including radio frequency information of the AP and the radio frequency information of the neighbor AP is broadcast to a wireless terminal. The beacon packet is configured to indicate the wireless terminal for accessing the AP later to establish a first wireless link with the AP based on the radio frequency information of the AP and establish a second wireless link with the neighbor AP based on the radio frequency information of the neighbor AP; the radio frequency information of the AP is different from the radio frequency information of the neighbor AP.

At step 123, a first data packet is received from the wireless terminal based on the first wireless link.

At step 124, the first data packet is sent to the AC.

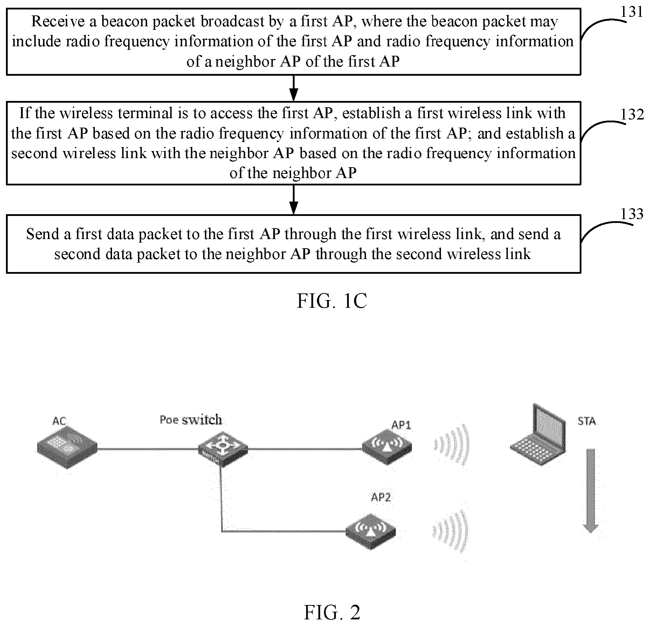

An embodiment of the present disclosure provides a packet transmission method, which is applied to a wireless terminal (i.e. wireless client). With reference to FIG. 1C, it is a schematic flowchart of the method. The method may include the following steps 131 to 133.

At step 131, a beacon packet broadcast by a first AP is received, where the beacon packet may include radio frequency information of the first AP and radio frequency information of a neighbor AP of the first AP.

At step 132, if the wireless terminal is to access the first AP, a first wireless link is established with the first AP based on the radio frequency information of the first AP; based on the radio frequency information of the neighbor AP, a second wireless link is established with the neighbor AP.

At step 133, a first data packet is sent to the first AP through the first wireless link, and a second data packet is sent to the neighbor AP through the second wireless link. The first data packet and the second data packet carry same load contents.

From the above technical solutions, it can be seen that in the embodiments of the present disclosure, the beacon packet broadcast by the first AP includes the radio frequency information of the first AP and the radio frequency information of the neighbor AP of the first AP such that the wireless terminal can establish a wireless link with the first AP based on the radio frequency information of the first AP and establish a wireless link with the neighbor AP based on the radio frequency information of the neighbor AP. That is, the wireless terminal can establish a wireless link with a plurality of APs at the same time. Thus, in a roaming process of the wireless terminal, when the wireless terminal roams from the coverage of the first AP to the coverage of the neighbor AP, the wireless terminal does not need to reestablish a wireless link with the neighbor AP, so as to avoid interruption of transmission process of the data packets. Thus, the wireless terminal can continuously send data packets and receive data packets, thereby improving the user experience. For the reconnection process of the roam, in order to ensure roam continuity, the wireless terminal has no perception for the reconnection process, maintaining service uninterrupted.

In one example, when the AC determines the neighbor AP of the first AP from a plurality of APs, the neighbor AP of the first AP is determined in the following manner: for each AP other than the first AP, if a signal strength of the first AP detected by the AP is greater than a signal strength threshold, the AP is determined as the neighbor AP of the first AP. Alternatively, if the signal strength of the first AP detected by the AP is greater than the signal strength threshold and a communication quality of the AP is greater than a communication quality threshold, the AP is determined as the neighbor AP of the first AP.

In one example, After the first AP receives the first data packet from the wireless terminal based on the first wireless link, the first AP may determine a first signal strength of the first data packet. The first signal strength is a signal strength measured when the first AP receives the first data packet through the first wireless link. The first AP sends the first signal strength to the AC. After the neighbor AP receives the second data packet from the wireless terminal through the second wireless link, the neighbor AP may determine a second signal strength of the second data packet. The second signal strength is a signal strength measured when the neighbor AP receives the second data packet through the second wireless link. The neighbor AP sends the second signal strength to the AC.

The AC determines the first signal strength of the first data packet and the AC determines the second signal strength of the second data packet. If the first signal strength is not less than the second signal strength, the AC may discard the second data packet and send the first data packet to the Internet. Alternatively, if the first signal strength is less than the second signal strength, the AC may discard the first data packet and send the second data packet to the Internet.

In one example, when the AC receives a response data packet for the first data packet or the second data packet, if the first signal strength is not less than the second signal strength, the AC sends the response data packet to the first AP such that the first AP can send the response data packet to the wireless terminal through the first wireless link. Alternatively, if the first signal strength is less than the second signal strength, the AC sends the response data packet to the neighbor AP of the first AP such that the neighbor AP can send the response data packet to the wireless terminal through the second wireless link.

In one example, the AC may also detect whether the wireless terminal roams from the first AP to a second AP. The second AP may be the neighbor AP of the first AP. A signal strength measured when the second AP receives a data packet from the wireless terminal is greater than the signal strength measured when the first AP receives a data packet from the wireless terminal.

If the wireless terminal roams from the first AP to the second AP, the AC may send radio frequency information of a neighbor AP of the second AP to the second AP such that the second AP can broadcast a beacon packet including radio frequency information of the second AP and the radio frequency information of the neighbor AP of the second AP. The beacon packet is configured to indicate the wireless terminal for accessing the second AP later to establish a wireless link with the second AP based on the radio frequency information of the second AP and establish a wireless link with the neighbor AP based on the radio frequency information of the neighbor AP of the second AP. The radio frequency information of the second AP is different from the radio frequency information of the neighbor AP.

If the wireless terminal roams from the first AP to the second AP, the wireless terminal determines whether there is a wireless link between the wireless terminal and the second AP; if not, the wireless terminal establishes a wireless link with the second AP based on the radio frequency information of the second AP; if yes, the wireless terminal maintains the wireless link between the wireless terminal and the second AP. Furthermore, the wireless terminal determines whether there is a wireless link between the wireless terminal and the neighbor AP of the second AP; if not, the wireless terminal establishes a wireless link with the neighbor AP of the second AP based on the radio frequency information of the neighbor AP of the second AP; if yes, the wireless terminal maintains the wireless link between the wireless terminal and the neighbor AP of the second AP.

In one example, the AC may also obtain a link number of established wireless links of the wireless terminal. If the link number reaches a number threshold, the AC sends a link disconnection packet to an AP corresponding to an earliest-established wireless link such that the AP can disconnect the wireless link between the AP and the wireless terminal based on the link disconnection packet. The number threshold may be less than or equal to a radio frequency number of the wireless terminal.

If the first AP (i.e. the first AP is the AP corresponding to the earliest-established wireless link in all the established wireless links) receives the link disconnection packet from the AC, the first AP disconnects the first wireless link between the first AP and the wireless terminal based on the link disconnection packet. The link disconnection packet is sent when the AC determines the link number of the established wireless links of the wireless terminal reaches the number threshold.

In one example, the beacon packet may include a Multi-Link (ML) field and the ML field may represent the beacon packet carries the radio frequency information of the neighbor AP. The beacon packet may also carry a Reduced Neighbor Report (RNR) field which is configured to carry the radio frequency information of the neighbor AP.

The technical solutions will be described below in combination with specific application scenarios.

With reference to FIG. 2, it is a networking schematic diagram of a WALN. The WLAN may include an AC and a plurality of APs under the management of the AC. These APs may be denoted as AP1, AP2, .... The AC may connect with each AP via a Power Over Ethernet (POE) switch or a switch of another type.

The wireless terminal (also called wireless client) may be a laptop, and smart phone and the like. The wireless terminal is a terminal accessing an AP wirelessly, and the type of the wireless terminal is not limited herein.

In one example, for each AP of a plurality of APs under the management of the AC, the AP may be denoted as a first AP, and the AC may determine a neighbor AP (the number of the neighbor APs may be one or more) of the first AP from the plurality of APs. For example, if the AC manages AP1, AP2, AP3 and AP4, when the AP1 is determined as the first AP, the AC determines the neighbor AP of the first AP is AP2. When the AP2 is determined as the first AP, the AC determines the neighbor AP of the first AP is AP1 and AP3. When the AP3 is determined as the first AP, the AC determines the neighbor AP of the first AP is AP2 and AP4. When the AP4 is determined as the first AP, the AC determines the neighbor AP of the first AP is AP3.

In one example, the AC may determine the neighbor AP of the first AP in the following manners.

In a first manner: for each AP under the management of the AC (each AP other than the first AP), if the AC determines the signal strength of the first AP detected by the AP is greater than a signal strength threshold (configured based on experience), it indicates that the AP has a short distance from the first AP, and the AP is determined as the neighbor AP of the first AP. If the signal strength is not greater than the signal strength threshold, it indicates that the AP has a long distance from the first AP and the AP is not determined as the neighbor AP of the first AP.

Obviously, after the above processing operations are performed on each AP under the management of the AC, the neighbor AP of the first AP can be determined and the number of the neighbor APs may be one or more or null.

When the AP detects the signal strength of the first AP, the AP may send a detection packet to the first AP. The first AP determines a signal strength of the detection packet and the signal strength is a signal strength measured when the first AP receives the detection packet of the AP. The first AP sends the signal strength of the detection packet to the AC, and the AC determines the signal strength of the detection packet as the signal strength of the first AP detected by the AP.

Alternatively, the first AP may send a detection packet to the AP and the AP determines a signal strength of the detection packet. The signal strength may be a signal strength measured when the AP receives the detection packet of the first AP. The AP may send the signal strength of the detection packet to the AC, and the AC determines the signal strength of the detection packet as the signal strength of the first AP detected by the AP.

From the above, it can be seen that when the AC determines the neighbor AP of the first AP from a plurality of APs, the signal strength of the first AP detected by the neighbor AP may be greater than the signal strength threshold.

In a second manner: for each AP under the management of the AC (each AP other than the first AP), the AC determines the signal strength of the first AP detected by the AP and also the AC determines the communication quality of the AP.

If the signal strength is greater than the signal strength threshold, it indicates that the AP has a short distance from the first AP. If the communication quality of the AP is greater than a communication quality threshold, it indicates that the communication quality of the AP is better and the AP can guarantee the communication quality of the data packets when processing the data packets. For this reason, the AP can be determined as the neighbor AP of the first AP such that the wireless terminal can provide better use experience. If the signal strength is not greater than the signal strength threshold, and/or the communication quality of the AP is not greater than the communication quality threshold (i.e. the communication quality of the AP is poor), the AP may also not be determined as the neighbor AP of the first AP.

Obviously, after the above processing operations are performed on each AP under the management of the AC, the neighbor AP of the first AP can be determined and the number of the neighbor APs may be one or more.

For the communication quality of the AP (also called network quality), the AP may perform statistics on a communication quality index of the present AP and send the communication quality index of the present AP to the AC. The AC determines the communication quality of the AP based on the communication quality index. For example, the communication quality index may include but not limited to at least one of a packet loss rate, a delay and a delay jitter. The AC may determine the communication quality of the AP based on the packet loss rate, the delay and the delay jitter. For example, the larger the packet loss rate is, the smaller the communication quality is (representing poor communication quality); the smaller the packet loss rate is, the larger the communication quality is. The larger the delay is, the smaller the communication quality is; the smaller the delay is, the larger the communication quality is; the larger the delay jitter is, the smaller the communication quality is; the smaller the delay jitter, the larger the communication quality is. Of course, the above is only an example of the communication quality and no limitation is made herein.

From the above, it can be seen that when the AC determines the neighbor AP of the first AP from a plurality of APs, the signal strength of the first AP detected by the neighbor AP may be greater than the signal strength threshold and the communication quality of the neighbor AP is greater than the communication quality threshold.

In one example, for the first manner, since the distance between the first AP and the neighbor AP does not change, after the neighbor AP of the first AP is determined, the neighbor AP also will not change. In this way, after the neighbor AP of the first AP is determined, the AC does not need to re-determine the neighbor AP of the first AP.

For the second manner, since the communication quality of each AP may change, after the neighbor AP of the first AP is determined, the neighbor AP may also change. For this reason, the AC may periodically determine the neighbor AP of the first AP or re-determine the neighbor AP of the first AP when a trigger condition is satisfied (for example, the communication quality of the AP changes). In one word, after the neighbor AP of the first AP is determined, the AC needs to re-determine the neighbor AP of the first AP and when the neighbor AP changes, update the neighbor AP of the first AP.

In one example, after the AC determines the neighbor AP of the first AP from a plurality of APs, the AC may virtualize the first AP and the neighbor AP as a distributed AP. When the first AP and the neighbor AP are virtualized as one distributed AP, the wireless terminal may be provided with joint service by the first AP and the neighbor AP in the distributed AP.

For example, the virtualization of the first AP and the neighbor AP as one distributed AP means the first AP and the neighbor AP are same AP. When the first AP and the neighbor AP provide wireless service for the wireless terminal at the same time, it means wireless service is provided for the wireless terminal by same AP. It can be understood that wireless service is provided for the wireless terminal by a plurality of radio frequency units of the same AP, namely, each AP corresponds to one radio frequency unit.

For example, when virtualizing the first AP and the neighbor AP as one distributed AP, the AC may virtualize a first radio frequency unit of the first AP (i.e. any radio frequency unit supported by the first AP) and a second radio frequency unit of the neighbor AP (any radio frequency unit supported by the neighbor AP) as one distributed AP, where the first radio frequency unit is different from the second radio frequency unit.

When the AP2 is used as the first AP, the neighbor AP of the first AP is AP1 and AP3. If the AP1, the AP2 and the AP3 all support a radio frequency unit a1, a radio frequency unit a2, a radio frequency unit a3 and a radio frequency unit a4, the radio frequency unit a1 of the AP1, the radio frequency unit a2 of the AP2 and the radio frequency unit a3 of the AP3 can be virtualized as one distributed AP, namely, the distributed AP includes the radio frequency unit a1 of the AP1, the radio frequency unit a2 of the AP2 and the radio frequency unit a3 of the AP3. On this basis, wireless service can be provided for the wireless terminal by the radio frequency unit a1 of the AP1, the radio frequency unit a2 of the AP2 and the radio frequency unit a3 of the AP3.

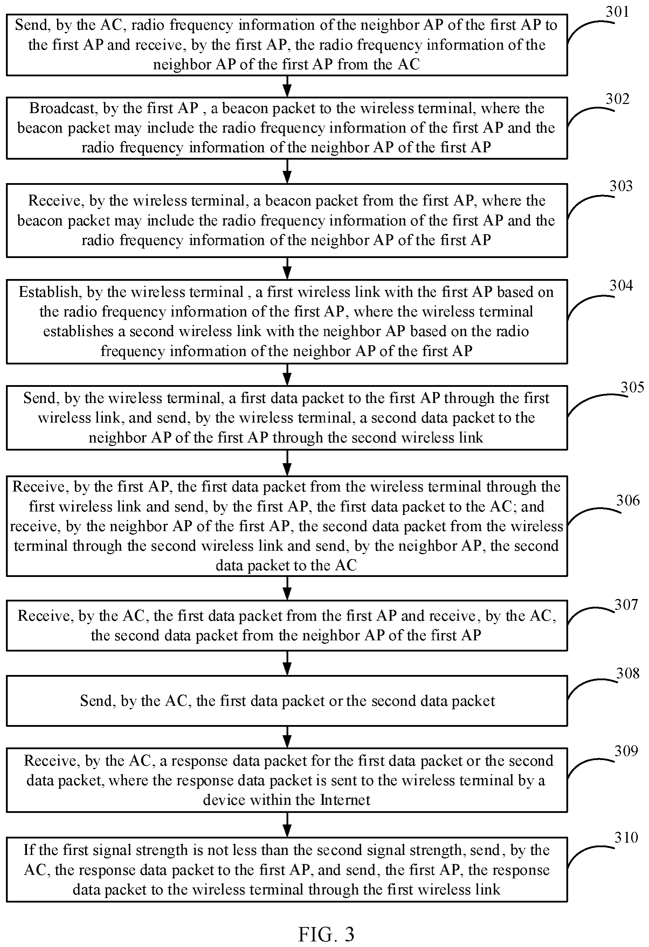

In the above application scenario, an embodiment of the present disclosure provides a packet transmission method. If a plurality of APs under the management of the AC include the AP1, the AP2 and the AP3, the AP2 is the neighbor AP of the AP1, the AP1 and the AP3 are the neighbor APs of the AP2, and the AP2 is the neighbor AP of the AP3. As shown in FIG. 3, the method may include the following steps 301 to 310.

At step 301, the AC sends radio frequency information of the neighbor AP of the first AP to the first AP and the first AP receives the radio frequency information of the neighbor AP of the first AP from the AC.

For example, when the AP1 is used as the first AP, the AP2 is the neighbor AP of the AP1. If the AC virtualizes the radio frequency unit a1 of the AP1 and the radio frequency unit a2 of the AP2 as one distributed AP, the AC sends the radio frequency information of the radio frequency unit a2 of the AP2 to the AP1. The radio frequency information may include but not limited to channel information and Basic Service Set Identifier (BSSID) of the radio frequency unit a2 of the AP2. The radio frequency information is not specifically limited herein. The BSSID can be understood as a unique identifier for identifying the AP2 in the WLAN.

When the AP2 is used as the first AP, the AP1 and the AP3 are neighbor APs of the AP2. When the AC virtualizes the radio frequency unit a1 of the AP1, the radio frequency unit a2 of the AP2 and the radio frequency unit a3 of the AP3 as one distributed AP, the AC sends the radio frequency information of the radio frequency unit a1 of the AP1 and the radio frequency information of the radio frequency unit a3 of the AP3 to the AP2.

At step 302, the first AP broadcasts a beacon packet to the wireless terminal, where the beacon packet may include the radio frequency information of the first AP and the radio frequency information of the neighbor AP of the first AP.

For example, when the AP1 is used as the first AP, the AP1 may broadcast a beacon packet 1. If the AC virtualizes the radio frequency unit a1 of the AP1 and the radio frequency unit a2 of the AP2 as one distributed AP, the beacon packet 1 may include the radio frequency information of the radio frequency unit a1 of the AP1 and the radio frequency information of the radio frequency unit a2 of the AP2.

When the AP2 is used as the first AP, the AP2 may broadcast a beacon packet 2. If the AC virtualizes the radio frequency unit a1 of the AP1, the radio frequency unit a2 of the AP2, and the radio frequency unit a3 of the AP3 as one distributed AP, the beacon packet 2 may include the radio frequency information of the radio frequency unit a1 of the AP1, the radio frequency information of the radio frequency unit a2 of the AP2, and the radio frequency information of the radio frequency unit a3 of the AP3.

In one example, when the first AP broadcasts a beacon packet to the wireless terminal, the beacon packet may be a beacon packet which includes a BSSID field for carrying the radio frequency information of the first AP. On this basis, the beacon packet may further include a multi-link (ML) field for representing the beacon packet carries the radio frequency information of the neighbor AP or does not carry the radio information of the neighbor AP. For example, if the value of the ML field is a first value (e.g. 1), it indicates that the beacon packet carries the radio frequency information of the neighbor AP. If the value of the ML field is a second value (e.g. 2), it indicates that the beacon packet does not carry the radio frequency information of the neighbor AP.

For example, if the first AP supports that the radio frequency units of different APs are virtualized as one distributed AP, that is, if the first AP supports that the beacon packet carries the radio frequency information of the neighbor AP, when the first AP sends the beacon packet to the wireless terminal, the value of the ML field is the first value. Alternatively, if the first AP does not support that the radio frequency units of different APs are virtualized as one distributed AP, that is, if the first AP does not support that the beacon packet carries the radio frequency information of the neighbor AP, when the first AP sends the beacon packet to the wireless terminal, the value of the ML field is the second value.

If the ML field is configured to represent that the beacon packet carries the radio frequency information of the neighbor AP, the beacon packet may further include an RNR field for carrying the radio frequency information of the neighbor AP. If the ML field is configured to represent the beacon packet does not carry the radio frequency information of the neighbor AP, the beacon packet does not include the RNR field.

For example, when the AP1 is used as the first AP, the AP1 broadcasts the beacon packet 1, where the value of the ML field of the beacon packet 1 is the first value and the RNR field includes the radio frequency information of the radio frequency unit a2 of the AP2. When the AP2 is used as the first AP, the AP2 broadcasts the beacon packet 2, where the value of the ML field of the beacon packet 2 is the first value and the RNR field includes the radio frequency information of the radio frequency unit a1 of the AP1 and the radio frequency information of the radio frequency unit a3 of the AP3.

At step 303, the wireless terminal receives a beacon packet from the first AP. The beacon packet may include the radio frequency information of the first AP and the radio frequency information of the neighbor AP of the first AP.

For example, if the wireless terminal is located within the coverage of the AP1, the wireless terminal may receive the beacon packet 1 broadcast by the AP1. Further, the wireless terminal may also receive the beacon packet 2 broadcast by the AP2.

When the wireless terminal receives the beacon packets broadcast by a plurality of APs, the wireless terminal determines the signal strength of each beacon packet and only processes the beacon packet with the largest signal strength and discards the other beacon packets. If the beacon packet 1 has the largest signal strength, the wireless terminal performs subsequent processing based on the beacon packet 1 (for example, establish link and send data packet and the like), and the wireless terminal accesses the AP1 and discards the other beacon packets.

At step 304, the wireless terminal establishes a first wireless link with the first AP based on the radio frequency information of the first AP. The wireless terminal establishes a second wireless link with the neighbor AP based on the radio frequency information of the neighbor AP of the first AP.

In one example, the wireless terminal can obtain the radio frequency information of the first AP from the beacon packet and establish a link (denoted as the first wireless link) with the first AP based on the radio frequency information of the first AP. Further, the wireless terminal can also obtain the radio frequency information of the neighbor AP of the first AP and establish a link (denoted as the second wireless link) with the neighbor AP of the first AP based on the radio frequency information of the neighbor AP of the first AP.

For example, the AP1 broadcasts the beacon packet 1 and the wireless terminal obtains the radio frequency information of the radio frequency unit a1 of the AP1 from the BSSID field of the beacon packet 1. If the wireless terminal supports the radio frequency unit a1, the wireless terminal establishes the first wireless link with the AP1 based on the radio frequency information of the radio frequency unit a1 of the AP1, where the first wireless link is a link for the radio frequency unit a1. Based on the first wireless link, the wireless terminal can send a data packet to the AP1 via the radio frequency unit a1, and the AP1 can send a data packet to the wireless terminal via the radio frequency unit a1. For example, the first wireless link may be a WIFI-type link or a link of another type.

For example, the wireless terminal may also obtain the value of the ML field of the beacon packet 1. If the value of the ML field is the second value, the wireless terminal ends the processing procedure. If the value of the ML field is the first value, the wireless terminal may also obtain the content of the RNR field of the beacon packet 1, namely, obtain the radio frequency information of the radio frequency unit a2 of the AP2 from the RNR field. If the wireless terminal supports the radio frequency unit a2, the wireless terminal establishes the second wireless link with the AP2 based on the radio frequency information of the radio frequency unit a2 of the AP2. The second wireless link is a link for the radio frequency unit a2. Based on the second wireless link, the wireless terminal can send a data packet to the AP2 via the radio frequency unit a2 and the AP2 can also send a data packet to the wireless terminal via the radio frequency unit a2. For example, the second wireless link may be a WIFI-type link or a link of another type.

In one example, the wireless terminal may support a plurality of radio frequency units, for example, the radio frequency unit a1, the radio frequency unit a2, the radio frequency unit a3, and the radio frequency unit a4 and the like.

For example, the AC may obtain a plurality of radio frequency units supported by the wireless terminal. When the AC virtualizes the first AP and the neighbor AP as one distributed AP, the AC needs to virtualize the first radio frequency unit of the first AP (the radio frequency unit supported by the first AP and the wireless terminal at the same time) and the second radio frequency unit of the neighbor AP (the radio frequency unit supported by the neighbor AP and the wireless terminal at the same time) as one distributed AP, where the first radio frequency unit is different from the second radio frequency unit.

The wireless terminal supports a plurality of radio frequency units, which means that the wireless terminal allows a plurality of radio frequency units to concurrently receive data packets or send data packets. The plurality of radio frequency units may be radio frequency units across single or a plurality of frequency bands in 2.4GHz, 5GHz and 6GHz, which is not limited herein.

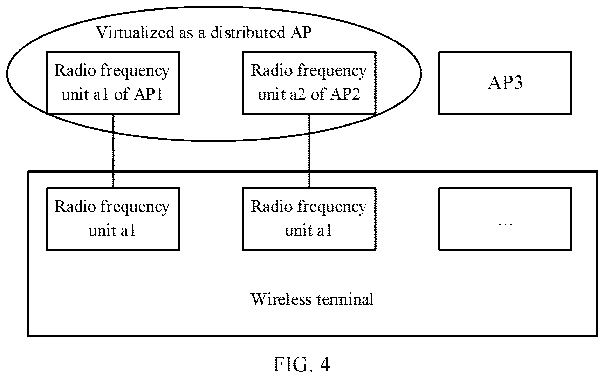

As shown in FIG. 4, it is a schematic diagram illustrating a wireless terminal establishing a wireless link with a plurality of APs. The AC virtualizes the radio frequency unit a1 of the AP1 and the radio frequency unit a2 of the AP2 as one distributed AP, and the wireless terminal supports the radio frequency unit a1 and the radio frequency unit a2. Based on the radio frequency information of the radio frequency unit a1 of the AP1, the wireless terminal establishes the first wireless link (denoted as link1) with the AP1. Based on the radio frequency information of the radio frequency unit a2 of the AP2, the wireless terminal establishes the second wireless link (denoted as link2) with the AP2.

At step 305, the wireless terminal sends a first data packet to the first AP through the first wireless link, and the wireless terminal sends a second data packet to the neighbor AP of the first AP through the second wireless link.

In one example, when the wireless terminal sends a data packet to the Internet, since the wireless terminal establishes the first wireless link with the first AP (AP1) and the first wireless link is a link for the radio frequency unit a1, the wireless terminal can, based on the radio frequency unit a1, send the data packet denoted as the first data packet to the first AP through the first wireless link. Since the wireless terminal establishes the second wireless link with the neighbor AP (e.g. AP2) of the first AP and the second wireless link is a link for the radio frequency unit a2, the wireless terminal can, based on the radio frequency unit a2, send the data packet denoted as the second data packet to the neighbor AP of the first AP through the second wireless link. Obviously, the first data packet and the second data packet are a same data packet, that is, the first data packet and the second data packet carry same load contents. Therefore, the same data packet is sent to the first AP and the neighbor AP.

At step 306, the first AP receives the first data packet from the wireless terminal through the first wireless link, and the first AP also sends the first data packet to the AC. The neighbor AP of the first AP receives the second data packet from the wireless terminal through the second wireless link and the neighbor AP also sends the second data packet to the AC.

In one example, the first AP receives the first data packet based on the first wireless link and determines a first signal strength of the first data packet, where the first signal strength is a signal strength measured when the first AP receives the first data packet through the first wireless link. The first AP sends the first data packet and the first signal strength to the AC.

The neighbor AP of the first AP receives the second data packet based on the second wireless link and determines a second signal strength of the second data packet, where the second signal strength is a signal strength measured when the neighbor AP receives the second data packet through the second wireless link. The neighbor AP sends the second data packet and the second signal strength to the AC.

At step 307, the AC receives the first data packet from the first AP and receives the second data packet from the neighbor AP of the first AP.

For example, the AC may receive the first data packet and the first signal strength from the first AP and receive the second data packet and the second signal strength from the neighbor AP of the first AP.

At step 308, the AC sends the first data packet or the second data packet. For example, the AC discards the first data packet and sends the second data packet to the Internet. Alternatively, the AC discards the second data packet and sends the first data packet to the Internet.

In one example, the AC may receive the first signal strength of the first data packet and the second signal strength of the second data packet. If the first signal strength is not less than the second signal strength, it indicates that the signal strength of the first data packet is superior to the signal strength of the second data packet, that is, the wireless terminal is located within the coverage of the first AP. Therefore, the AC can discard the second data packet and send the first data packet to the Internet.

Alternatively, if the first signal strength is less than the second signal strength, it indicates that the signal strength of the second data packet is superior to the signal strength of the first data packet, that is, the wireless terminal is located within the coverage of the neighbor AP of the first AP. The AC may discard the first data packet and send the second data packet to the Internet.

At step 309, the AC receives a response data packet for the first data packet or the second data packet, where the response data packet is sent to the wireless terminal by a device within the Internet.

At step 310, if the first signal strength is not less than the second signal strength, the AC sends the response data packet to the first AP, and the first AP sends the response data packet to the wireless terminal through the first wireless link. Alternatively, if the first signal strength is less than the second signal strength, the AC sends the response data packet to the neighbor AP of the first AP and the neighbor AP of the first AP sends the response data packet to the wireless terminal through the second wireless link.

In one example, if the first signal strength is not less than the second signal strength, it indicates that the wireless terminal is located within the coverage of the first AP and the AC sends the first data packet to the Internet. Based on this, when the AC receives a response data packet for the wireless terminal, the AC sends the response data packet to the first AP.

After the first AP receives the response data packet, since the first AP (e.g. AP1) establishes the first wireless link with the wireless terminal and the first wireless link is a link for the radio frequency unit a1, the first AP, based on the radio frequency unit a1, sends the response data packet to the wireless terminal through the first wireless link.

If the first signal strength is less than the second signal strength, it indicates that the wireless terminal is located within the coverage of the neighbor AP of the first AP and the AC sends the second data packet to the Internet. Based on this, when the AC receives a response data packet for the wireless terminal, the AC sends the response data packet to the neighbor AP of the first AP.

After the neighbor AP receives the response data packet, since the neighbor AP (e.g. AP2) establishes the second wireless link with the wireless terminal and the second wireless link is a link for the radio frequency unit a2, the neighbor AP, based on the radio frequency unit a2, sends the response data packet to the wireless terminal through the second wireless link.

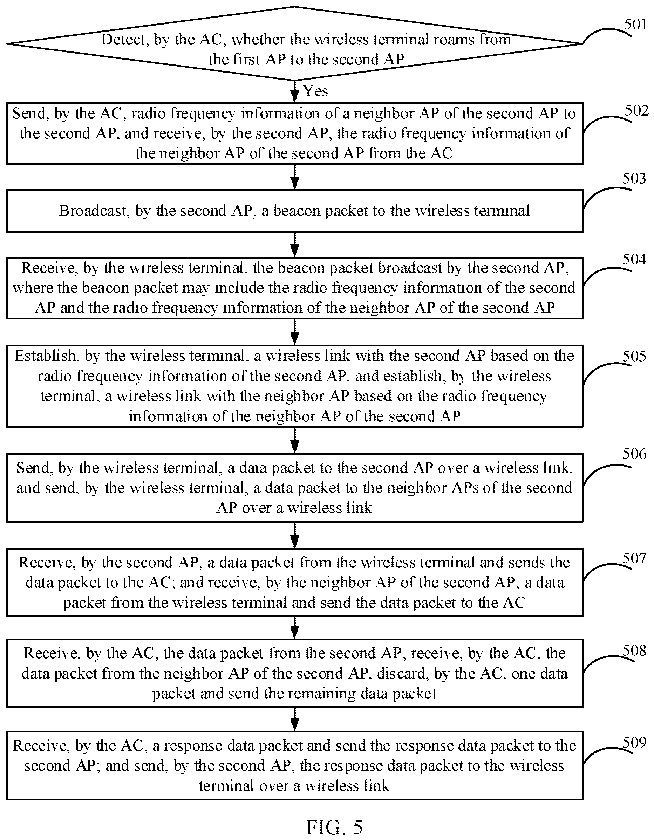

In one example, for a roaming process of the wireless terminal, for example, for a process in which the wireless terminal roams from the first AP to the neighbor AP of the first AP (for ease of distinguishing, the neighbor AP of the first AP is denoted as the second AP), as shown in FIG. 5, it is a schematic diagram illustrating a roaming process of the wireless terminal. The roaming process includes the following steps 501 to 509.

At step 501, the AC detects whether the wireless terminal roams from the first AP to the second AP, that is, whether the wireless terminal switches from the first AP to the second AP, where the second AP may be the neighbor AP of the first AP.

For example, when the AC receives the first signal strength of the first data packet and the second signal strength of the second data packet, if the first signal strength is not less than the second signal strength, it indicates that the wireless terminal is located within the coverage of the first AP, that is, the wireless terminal does not roam from the first AP to the second AP.

If the first signal strength is less than the second signal strength, it indicates that the wireless terminal is currently located under the coverage of the neighbor AP (i.e. second AP) of the first AP. But in order to avoid repeated roaming of the wireless terminal (i.e. roaming from the first AP to the second AP and then from the second AP to the first AP and repeating like this), the AC does not directly determine the wireless terminal roams from the first AP to the second AP but increases the number of roam times of the wireless terminal by 1 and determines the updated number of roam times reaches a times threshold (configured as 10 or 12 or the like based on experiences).

If yes, it indicates that the wireless terminal roams from the first AP to the second AP. If not, it indicates that the wireless terminal does not roam from the first AP to the second AP. When the AC receives the first signal strength of the first data packet and the second signal strength of the second data packet again, if the first signal strength is not less than the second signal strength (i.e. the wireless terminal roams from the second AP to the first AP again), the number of roam times of the wireless terminal is updated to 0. If the first signal strength is less than the second signal strength, the number of roam times of the wireless terminal is increased by 1 and whether the updated number of roam times reaches the times threshold is determined. The above process is repeated until the number of roam times reaches the times threshold.

If the wireless terminal does not roam from the first AP to the second AP, the steps 305 to 310 can be repeated. If the wireless terminal roams from the first AP to the second AP, step 502 is performed. When the wireless terminal roams from the first AP to the second AP, since the second AP is the neighbor AP of the first AP, the signal strength measured when the second AP receives the data packet from the wireless terminal is greater than the signal strength measured when the first AP receives the data packet from the wireless terminal.

At step 502, the AC sends radio frequency information of a neighbor AP of the second AP to the second AP, and the second AP receives the radio frequency information of the neighbor AP of the second AP from the AC.

For example, when the wireless terminal roams from the AP1 to the AP2, the AP2 is the second AP and the AP1 and the AP3 are neighbor APs of the AP2. If the AC virtualizes the radio frequency unit a1 of the AP1, the radio frequency unit a2 of the AP2 and the radio frequency unit a3 of the AP3 as one distributed AP, the AC sends the radio frequency information of the radio frequency unit a1 of the AP1 and the radio frequency information of the radio frequency unit a3 of the AP3 to the AP2.

At step 503, the second AP broadcasts a beacon packet to the wireless terminal. For example, the beacon packet may include the radio frequency information of the second AP and the radio frequency information of the neighbor AP of the second AP.

For example, the AP2 may broadcast a beacon packet to the wireless terminal. The beacon packet may include the radio frequency information of the radio frequency unit a1 of the AP1, the radio frequency information of the radio frequency unit a2 of the AP2, and the radio frequency information of the radio frequency unit a3 of the AP3.

For example, when the AP2 broadcasts a beacon packet to the wireless terminal, the beacon packet may include a BSSID field for carrying the radio frequency information of the AP2. The beacon packet may further include an ML field for representing the beacon packet carries the radio frequency information of the neighbor APs. For example, the value of the ML field may be the first value (e.g. 1), which indicates that the beacon packet carries the radio frequency information of the neighbor AP. The beacon packet may also include an RNR field configured to carry the radio frequency information of the AP1 and the radio frequency information of the AP3.

At step 504, the wireless terminal receives the beacon packet broadcast by the second AP, and the beacon packet may include the radio frequency information of the second AP and the radio frequency information of the neighbor AP of the second AP.

At step 505, the wireless terminal establishes a wireless link with the second AP based on the radio frequency information of the second AP. The wireless terminal establishes a wireless link with the neighbor AP based on the radio frequency information of the neighbor AP of the second AP.

The wireless terminal may obtain the radio frequency information from the beacon packet, and establish a wireless link with the second AP based on the radio frequency information of the second AP. When establishing the wireless link with the second AP, the wireless terminal determines whether there is a wireless link between the wireless terminal and the second AP. If not, the wireless terminal establishes a wireless link with the second AP based on the radio frequency information of the second AP; if yes, the wireless terminal maintains the wireless link between the wireless terminal and the second AP.

The wireless terminal may obtain the radio frequency information of the neighbor AP of the second AP from the beacon packet, and based on the radio frequency information of the neighbor AP, establish a wireless link with the neighbor AP. When establishing the wireless link with the neighbor AP, the wireless terminal determines whether there is a wireless link between the wireless terminal and the neighbor AP; if not, the wireless terminal establishes a wireless link with the neighbor AP based on the radio frequency information of the neighbor AP; if yes, the wireless terminal maintains the wireless link between the wireless terminal and the neighbor AP.

For example, the wireless terminal may obtain the radio frequency information of the radio frequency unit a2 of the AP2 from the BSSID field of the beacon packet. Since there is already a wireless link between the wireless terminal and the AP2, the wireless terminal maintains the wireless link between the wireless terminal and the AP2. Based on the wireless link between the wireless terminal and the AP2, the wireless terminal may send a data packet to the AP2 via the radio frequency unit a2, and the AP2 may send a data packet to the wireless terminal via the radio frequency unit a2.

The wireless terminal may also obtain the radio frequency information of the radio frequency unit a1 of the AP1 from the RNR field of the beacon packet. Since there is already a wireless link between the wireless terminal and the AP1, the wireless terminal maintains the wireless link between the wireless terminal and the AP1. Based on the wireless link between the wireless terminal and the AP1, the wireless terminal may send a data packet to the AP1 via the radio frequency unit a1, and the AP1 may also send a data packet to the wireless terminal via the radio frequency unit a1.

The wireless terminal may also obtain the radio frequency information of the radio frequency unit a3 of the AP3 from the RNR field of the beacon packet. Since there is no wireless link between the wireless terminal and the AP3, if the wireless terminal supports the radio frequency unit a3, the wireless terminal may establish a wireless link with the AP3 based on the radio frequency information of the radio frequency unit a3 of the AP3. The wireless link is a link for the radio frequency unit a3. Based on the wireless link, the wireless terminal may send a data packet to the AP3 via the radio frequency unit a3 and the AP3 may also send a data packet to the wireless terminal via the radio frequency unit a3.

To sum up, the wireless terminal may establish a wireless link with the AP1, the AP2 and the AP3 respectively.

At step 506, the wireless terminal sends a data packet to the second AP (e.g. AP2) over a wireless link, and the wireless terminal sends a data packet to the neighbor APs (e.g. AP1 and AP3) of the second AP over a wireless link.

At step 507, the second AP receives a data packet from the wireless terminal and sends the data packet to the AC; the neighbor AP of the second AP receives a data packet from the wireless terminal and sends the data packet to the AC.

At step 508, the AC receives the data packet from the second AP and the AC receives the data packet from the neighbor AP of the second AP. The AC discards one data packet and sends the remaining data packet.

At step 509, the AC receives a response data packet and sends the response data packet to the second AP; the second AP sends the response data packet to the wireless terminal over a wireless link. Alternatively, the AC sends a response data packet to the neighbor AP of the second AP and the neighbor AP of the second AP sends the response data packet to the wireless terminal over a wireless link.

The steps 506 to 509 can be referred to the steps 305 to 310 and will not be repeated herein.

In one example, for the roaming process of the wireless terminal, that is, for the process in which the wireless terminal roams from the second AP to the neighbor AP of the second AP, for example, roams from the AP2 to the AP1 or AP3, the flow shown in FIG. 5 can be repeated.

In one example, when the wireless terminal roams from the first AP to the neighbor AP of the first AP, the wireless link between the wireless terminal and the first AP may be disconnected such that the wireless terminal can continues establishing a wireless link with other APs, namely, establishing a wireless link with a next neighbor AP, ensuring roam continuity of the wireless terminal.

In one example, after the wireless terminal roams from the first AP to the neighbor AP of the first AP, the wireless terminal may re-roam to the first AP from the neighbor AP. Based on this, if the wireless link between the wireless terminal and the first AP is already disconnected, it is required to re-establish a wireless link between the wireless terminal and the first AP. In order to avoid repeating establishment and disconnection of the wireless link, the wireless link may also be disconnected in the following manner.

The AC may obtain a link number of established wireless links of the wireless terminal. For example, each time the wireless terminal establishes a new wireless link, the AC can obtain the link number of established wireless links of the wireless terminal. If the link number is M, it indicates the wireless terminal has established M wireless links, and can send a data packet to the MAPs over M wireless links respectively.

If the link number does not reach a number threshold, all established wireless links of the wireless terminal are maintained to continuously send data packets to the AP over the wireless links.

If the link number reaches the number threshold, the AC determines an AP corresponding to an earliest-established wireless link in all established wireless links. It is supposed that the wireless terminal establishes a wireless link 1 with the AP1, and then wireless terminal establishes a wireless link 2 with the AP2 and then the wireless terminal establishes a wireless link 3 with the AP3. In this case, the wireless link 1 is the earliest-established wireless link. The AC may send a link disconnection packet to the AP (e.g. AP1). After receiving the link disconnection packet from the AC, the AP disconnects the wireless link between the AP and the wireless terminal based on the link disconnection packet.

For example, the link disconnection packet carries information of the wireless terminal and the link disconnection packet indicates a need for disconnecting the wireless link between the AP and the wireless terminal. In this way, after receiving the link disconnection packet, the AP can, based on the information of the wireless terminal, know the wireless link to be disconnected between the present target AP and the wireless terminal.

In one example, the number threshold may be less than or equal to a radio frequency number of the wireless terminal. For example, if the wireless terminal supports the radio frequency unit a1, the radio frequency unit a2, the radio frequency unit a3, and the radio frequency unit a4, the radio frequency number of the wireless terminal is 4, that is, at most 4 wireless links are established by the wireless terminal. In this way, four wireless links are established by four radio frequency units. Based on this, the number threshold may be less than or equal to 4.

With the number threshold being 4 as example, if the link number of the established wireless links of the wireless terminal reaches the number threshold, it indicates that the wireless terminal cannot continue establishing a wireless link. Therefore, a wireless link between an AP and the wireless terminal can be disconnected such that the wireless terminal can continue establishing a wireless link, that is, the wireless terminal can continue establishing a wireless link with the other APs, so as to ensure the roam continuity of the wireless terminal.

In one example, in a storage application scenario, the wireless terminal may be a robot which may include Automated Guided Vehicle (AGV) and the like. A travel path of the robot may be planned in advance and thus the robot can travel along the travel path and handle loads in the travel process. It is supposed that the robot sequentially travels by the AP1, the AP2, the AP3 and the AP4 ... and so on along the travel path.

On this basis, when the robot roams to the coverage of the AP1, the robot establishes a wireless link with the AP1 and establishes a wires link with the AP2. When the robot roams to the coverage of the AP2, since the robot has already established a wireless link with the AP2, the robot can communicate with the AC via the AP2 without interrupting the service, and also the robot can establish a wireless link with the AP3. When the robot roams to the coverage of the AP3, since the robot has already established a wireless link with the AP3, the robot can communicate with the AC via the AP3 without interrupting the service and also the robot can establish a wireless link with the AP4 and so on.

To sum up, for an application scenario of single route, when the robot travels along the pre-planned travel path, it can be guaranteed that a wireless link between the robot and all neighbor APs can be established, ensuring the roam continuity.

From the above technical solutions, it can be seen that, in the embodiments of the present disclosure, in a roaming process of the wireless terminal, if the wireless terminal roams from one AP to the coverage of a neighbor AP, the wireless terminal does not need to re-establish a wireless link with the neighbor AP, avoiding interruption of the transmission process of the data packets and improving the user experience. For the reconnection process of the roam, in order to ensure roam continuity, the wireless terminal has no perception for the reconnection process, maintaining service uninterrupted. The more the radio frequency number of the wireless terminal is, the more wireless links the wireless terminal establishes at the same time, and can move under more APs, expanding the moving scope of the wireless terminal and increasing its flexibility. A plurality of APs can work by multi-link synergy with its entire performance exceeding the extreme of the single APs while load sharing can be performed among a plurality of wireless links, ensuring the use experience of multi-user concurrence. In a roaming scenario of the wireless terminal, the wireless terminal will not interrupt service due to roam, realizing WIFI-based zero roam, solving the WIFI reconnection problem of the wireless terminal in the roaming process, and improving the user experience.

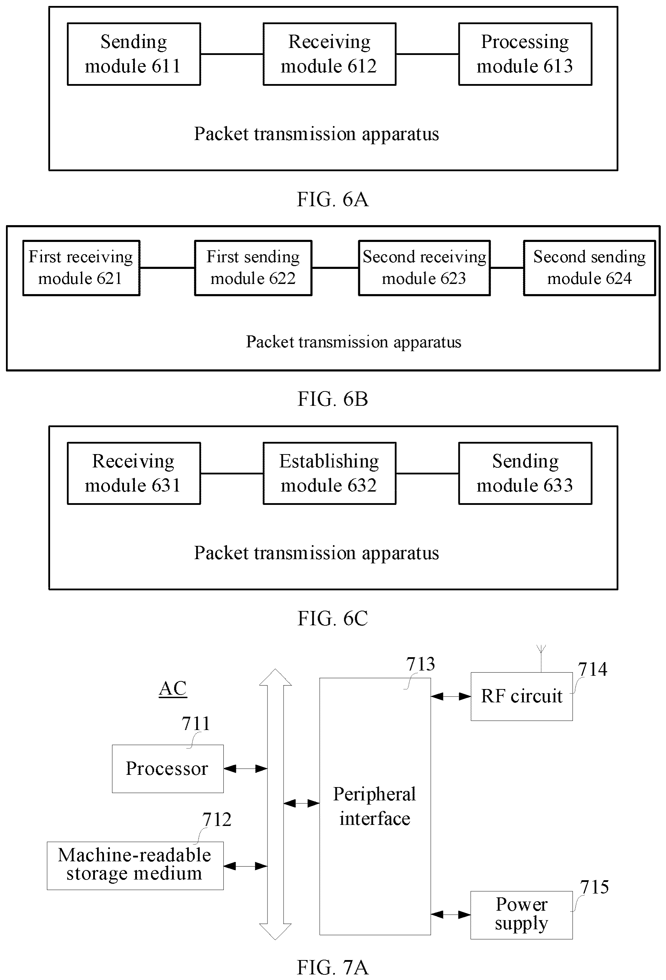

Based on the same application concept as the method, the embodiments of the present disclosure provide a packet transmission apparatus, applied to an access controller (AC). FIG. 6A is a structural schematic diagram illustrating a packet transmission apparatus according to an embodiment of the present disclosure. As shown in FIG. 6A, the apparatus includes: a sending module 611, a receiving module 612, and a processing module 613.

The sending module 611 is configured to: for any first access point (AP) in a plurality of APs under the management of the AC, send radio frequency information of a neighbor AP of the first AP to the first AP such that the first AP broadcasts a beacon packet carrying the radio frequency information of the first AP and the radio frequency information of the neighbor AP; where the beacon packet is configured to indicate a wireless terminal for accessing the first AP later to establish a first wireless link with the first AP based on the radio frequency information of the first AP, and establish a second wireless link with the neighbor AP based on the radio frequency information of the neighbor AP; where the radio frequency information of the first AP is different from the radio frequency information of the neighbor AP;
The receiving module 612 is configured to receive a first data packet from the first AP and a second data packet from the neighbor AP, where the first data packet is sent to the first AP by the wireless terminal based on the first wireless link, and the second data packet is sent to the neighbor AP by the wireless terminal based on the second wireless link; where the first data packet and the second data packet carry same load contents; and

The processing module 613 is configured to send the first data packet or the second data packet.

In an embodiment, the neighbor AP of the first AP is determined by:
for each AP other than the first AP, in response to a signal strength of the first AP detected by the AP being greater than a signal strength threshold, determining the AP as the neighbor AP of the first AP; or
in response to the signal strength of the first AP detected by the AP being greater than the signal strength threshold and a communication quality of the AP being greater than a communication quality threshold, determining the AP the neighbor AP of the first AP.

In an embodiment, the processing module 613 is configured to: when sending the first data packet or the second data packet, determine a first signal strength of the first data packet, where the first signal strength is a signal strength measured when the first AP receives the first data packet through the first wireless link; determine a second signal strength of the second data packet, where the second signal strength is a signal strength measured when the neighbor AP receives the second data packet through the second wireless link; and in response to the first signal strength being not less than the second signal strength, send the first data packet; or in response to the first signal strength being less than the second signal strength, send the second data packet.

In an embodiment, the sending module 611 is configured to: when receiving a response data packet for the first data packet or the second data packet, in response to the first signal strength being not less than the second signal strength, send the response data packet to the first AP such that the first AP sends the response data packet to the wireless terminal through the first wireless link; or in response to the first signal strength being less than the second signal strength, send the response data packet to the neighbor AP such that the neighbor AP sends the response data packet to the wireless terminal through the second wireless link.

In an embodiment, the processing module 613 is further configured to: detect whether the wireless terminal roams from the first AP to a second AP; where the second AP is the neighbor AP of the first AP, and the signal strength measured when the second AP receives a data packet from the wireless terminal is greater than the signal strength measured when the first AP receives a data packet from the wireless terminal; and in response to determining that the wireless terminal roams from the first AP to a second AP, send radio frequency information of a neighbor AP of the second AP to the second AP such that the second AP broadcasts a beacon packet carrying the radio frequency information of the second AP and the radio frequency information of the neighbor AP.

In an embodiment, the processing module 613 is further configured to: obtain a link number of established wireless links of the wireless terminal; and in response to the link number reaching a number threshold, send a link disconnection packet to an AP corresponding to an earliest-established wireless link such that the AP disconnects the wireless link between the AP and the wireless terminal based on the link disconnection packet, where the number threshold is less than or equal to a radio frequency number of the wireless terminal.

Based on the same application concept as the method, the embodiments of the present disclosure provide a packet transmission apparatus, applied to an access point (AP). FIG. 6B is a structural schematic diagram illustrating a packet transmission apparatus according to an embodiment of the present disclosure. As shown in FIG. 6B, the apparatus includes: a first receiving module 621, a first sending module 622, a second receiving module 623 and a second sending module 624.

The first receiving module 621 is configured to receive radio frequency information of a neighbor AP of the AP from an access controller (AC) accessed by the AP. The first sending module 622 is configured to broadcast a beacon packet to a wireless terminal, where the beacon packet includes radio frequency information of the AP and the radio frequency information of the neighbor AP; the beacon packet is configured to indicate the wireless terminal for accessing the AP later to establish a first wireless link with the AP based on the radio frequency information of the AP and establish a second wireless link with the neighbor AP based on the radio frequency information of the neighbor AP; where the radio frequency information of the AP is different from the radio frequency information of the neighbor AP;
The second receiving module 623 is configured to receive, based on the first wireless link, a first data packet from the wireless terminal. The second sending module 624 is configured to send the first data packet to the AC.

In an embodiment, the second sending module 624 is further configured to: after receiving the first data packet from the wireless terminal based on the first wireless link, determine a first signal strength of the first data packet, where the first signal strength is a signal strength measured when the AP receives the first data packet through the first wireless link; and send the first signal strength to the AC.

In an embodiment, the beacon packet includes a multi-link (ML) field, where the ML field represents that the beacon packet carries the radio frequency information of the neighbor AP; the beacon packet includes a reduced neighbor report (RNR) field, and the RNR field is configured to carry the radio frequency information of the neighbor AP.

In an embodiment, the first receiving module 621 is further configured to: in response to receiving a link disconnection packet from the AC, disconnect the first wireless link between the AP and the wireless terminal based on the link disconnection packet; where the link disconnection packet is sent when the AC determines a link number of established wireless links of the wireless terminal reaches a number threshold, and the AP is an AP corresponding to an earliest-established wireless link of all the established wireless links.

Based on the same application concept as the method, the embodiments of the present disclosure provide a packet transmission apparatus, applied to a wireless terminal. FIG. 6C is a structural schematic diagram illustrating a packet transmission apparatus according to an embodiment of the present disclosure. As shown in FIG. 6C, the apparatus includes: a receiving module 631, an establishing module 632 and a sending module 633.

The receiving module 631 is configured to receive a beacon packet broadcast by a first access point (AP), where the beacon packet includes radio frequency information of the first AP and radio frequency information of a neighbor AP of the first AP.

The establishing module 632 is configured to: in response to the wireless terminal being to access the first AP, establish a first wireless link with the first AP based on the radio frequency information of the first AP; and establish a second wireless link with the neighbor AP based on the radio frequency information of the neighbor AP.

The sending module 633 is configured to send a first data packet to the first AP through the first wireless link, and send a second data packet to the neighbor AP through the second wireless link; where the first data packet and the second data packet carry same load contents.

In an embodiment, in response to the wireless terminal roaming from the first AP to a second AP, the sending module 633 is configured to determine whether there is a wireless link between the wireless terminal and the second AP; in response to determining that there is no wireless link between the wireless terminal and the second AP, establish a wireless link with the second AP based on the radio frequency information of the second AP; where the beacon packet broadcast by the second AP includes the radio frequency information of the second AP; and determine whether there is a wireless link between the wireless terminal and a neighbor AP of the second AP; in response to determining that there is no wireless link between the wireless terminal and a neighbor AP of the second AP, establish a wireless link with the neighbor AP based on the radio frequency information of the neighbor AP; where the beacon packet broadcast by the second AP includes the radio frequency information of the neighbor AP of the second AP.

In an embodiment, the beacon packet includes a multi-link (ML) field, where the ML field represents the beacon packet carries the radio frequency information of the neighbor AP; the beacon packet includes a reduced neighbor report (RNR) field, and the RNR field is configured to carry the radio frequency information of the neighbor AP.

Based on the same application concept as the method, the embodiments of the present disclosure provide an electronic device (for example, an access controller (AC), an access point (AP), and a wireless terminal), including a processor and a memory storing instructions executable by the processor, where the instructions, when executed by the processor, cause the processor to perform the method packet transmission according to any one of the embodiments of the present disclosure.

Based on the same application concept as the method, the embodiments of the present disclosure provide an AC. As shown in FIG. 7A, the AC may include a processor 711 and a machine-readable storage medium 712, storing machine-executable instructions executable by the processor 711, where the machine-executable instructions, when executed by the processor 711, cause the processor 711 to perform the packet transmission method according to any one of the embodiments of the present disclosure.

In an embodiment, the processor 711 may include one or more processing cores, such as a 4-core processor, an 8-core processor, and the like. The processor 711 can be implemented in at least one hardware form of digital signal processing (DSP), field-programmable gate array (FPGA) and programmable logic array (PLA).

The processor 711 may also include a main processor and a co-processor. The main processor is a processor for processing data in the wake-up state, also called a central processing unit (CPU). The co-processor is a low-power processor for processing data in standby state.

In some embodiments, the processor 711 may be integrated with a graphics processing unit (GPU), and the GPU is used for rendering and drawing the contents to be displayed on the display screen.

In an embodiment, the AC may include a peripheral interface 713 and at least one peripheral device. The processor 711 and the peripheral interface 713 can be connected by a bus or a signal line. Each peripheral device can be connected to the peripheral interface 713 through a bus, a signal line or a circuit board. For example, the peripheral device may include at least one of a radio frequency circuit 714 and a power supply 715.

The radio frequency circuit 714 is used to receive and transmit radio frequency (RF) signals, also called electromagnetic signals. The RF circuit 714 communicates with the communication network and other communication devices through electromagnetic signals. The RF circuit 714 converts an electrical signal into an electromagnetic signal for transmission, or converts a received electromagnetic signal into an electrical signal. In an embodiment, the RF circuit 714 includes an antenna system, an RF transceiver, one or more amplifiers, a tuner, an oscillator, a digital signal processor, a subscriber identity module card, and the like.

The RF circuit 714 can communicate with the user equipment through at least one wireless communication protocol. The wireless communication protocol includes, but is not limited to, World Wide Web, MAN, Intranet, mobile communication networks of various generations (2G, 3G, 4G and 5G), wireless local area network and/or Wireless Fidelity (WiFi) network.

The power supply 715 is used to supply power to various components in electronic equipment, and the power supply 715 can be alternating current, direct current, disposable battery or rechargeable battery, and the type of the power supply 715 is not limited.

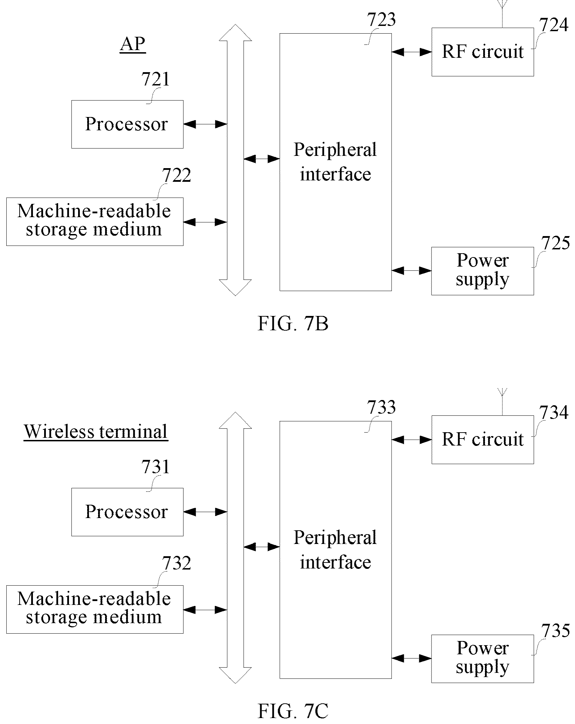

Based on the same application concept as the method, the embodiments of the present disclosure provide an AP. As shown in FIG. 7B, the AP may include a processor 721 and a machine-readable storage medium 722, storing machine-executable instructions executable by the processor 721, where the machine-executable instructions, when executed by the processor 721, cause the processor 721 to perform the packet transmission method according to any one of the embodiments of the present disclosure.

The processor 721 may include one or more processing cores, such as a 4-core processor, an 8-core processor, and the like. The processor 721 can be implemented in at least one hardware form of DSP, FPGA and PLA.

The processor 721 may also include a main processor and a co-processor. The main processor is a processor for processing data in the wake-up state, also called a CPU. The co-processor is a low-power processor for processing data in standby state. In some embodiments, the processor 721 may be integrated with a GPU, and the GPU is used for rendering and drawing the contents to be displayed on the display screen.

In an embodiment, the AP may include a peripheral interface 723 and at least one peripheral device. The processor 721 and the peripheral interface 723 can be connected by a bus or a signal line. Each peripheral device can be connected to the peripheral interface 723 through a bus, a signal line or a circuit board. For example, the peripheral device may include at least one of a radio frequency circuit 724 and a power supply 725.

The radio frequency circuit 724 is used to receive and transmit RF signals, also called electromagnetic signals. The RF circuit 724 communicates with the communication network and other communication devices through electromagnetic signals. The RF circuit 724 converts an electrical signal into an electromagnetic signal for transmission, or converts a received electromagnetic signal into an electrical signal. In an embodiment, the RF circuit 724 includes an antenna system, an RF transceiver, one or more amplifiers, a tuner, an oscillator, a digital signal processor, a subscriber identity module card, and the like. The RF circuit 724 can communicate with the user equipment through at least one wireless communication protocol. The wireless communication protocol includes, but is not limited to, World Wide Web, MAN, Intranet, mobile communication networks of various generations, wireless local area network and/or WiFi network.

The power supply 725 is used to supply power to various components in electronic equipment, and the power supply 725 can be alternating current, direct current, disposable battery or rechargeable battery, and the type of the power supply 725 is not limited.

Based on the same application concept as the method, the embodiments of the present disclosure provide a wireless terminal. As shown in FIG. 7C, the wireless terminal may include a processor 731 and a machine-readable storage medium 732, storing machine-executable instructions executable by the processor 731, where the machine-executable instructions, when executed by the processor 731, cause the processor 731 to perform the packet transmission method according to any one of the embodiments of the present disclosure.

The processor 731 may include one or more processing cores, such as a 4-core processor, an 8-core processor, and the like. The processor 731 can be implemented in at least one hardware form of DSP, FPGA and PLA.

The processor 731 may also include a main processor and a co-processor. The main processor is a processor for processing data in the wake-up state, also called a CPU. The co-processor is a low-power processor for processing data in standby state. In some embodiments, the processor 731 may be integrated with a GPU, and the GPU is used for rendering and drawing the contents to be displayed on the display screen.

In an embodiment, the wireless terminal may include a peripheral interface 733 and at least one peripheral device. The processor 731 and the peripheral interface 733 can be connected by a bus or a signal line. Each peripheral device can be connected to the peripheral interface 733 through a bus, a signal line or a circuit board. For example, the peripheral device may include at least one of a radio frequency circuit 734 and a power supply 735.

The radio frequency circuit 734 is used to receive and transmit RF signals, also called electromagnetic signals. The RF circuit 734 communicates with the communication network and other communication devices through electromagnetic signals. The RF circuit 734 converts an electrical signal into an electromagnetic signal for transmission, or converts a received electromagnetic signal into an electrical signal. In an embodiment, the RF circuit 734 includes an antenna system, an RF transceiver, one or more amplifiers, a tuner, an oscillator, a digital signal processor, a subscriber identity module card, and the like. The RF circuit 734 can communicate with the user equipment through at least one wireless communication protocol. The wireless communication protocol includes, but is not limited to, World Wide Web, MAN, Intranet, mobile communication networks of various generations, wireless local area network and/or WiFi network.

The power supply 735 is used to supply power to various components in electronic equipment, and the power supply 735 can be alternating current, direct current, disposable battery or rechargeable battery, and the type of the power supply 735 is not limited.

Based on the same application concept as the method, the embodiments of the present disclosure provide a machine-readable storage medium, storing computer instructions, where the computer instructions, when executed by the processor, cause the processor to perform the packet transmission method according to any one of the embodiments of the present disclosure. In an example, the machine-readable storage medium may be any electronic, magnetic, optical, or other physical storage apparatus, and may contain or store information, such as executable instructions, data, and so on. For example, the machine-readable storage medium may be: a random access memory (RAM), volatile memory, non-volatile memory, flash memory, storage drive (such as hard drive), solid state hard disk, any type of storage disk (such as optical discs, DVDs, etc.), or similar storage media, or a combination thereof.

Based on the same application concept as the method, the embodiments of the present disclosure provide a a computer program product, including computer programs, where the computer programs, when executed by a processor, cause the processor to perform the packet transmission method according to any one of the embodiments of the present disclosure.

Those skilled in the art should understand that the embodiments of the present application can be provided as methods, systems, or computer program products. Therefore, the present disclosure may take the form of an entirely hardware implementation, an entirely software implementation, or an implementation combining both software and hardware aspects. Moreover, the present disclosure may take the form of a computer program product implemented on one or more computer-usable storage media (including, but not limited to, disk memory, CD-ROM, optical memory, etc.) containing computer-usable program code.

The above are only implementations of the present disclosure and are not intended to limit the present disclosure. For those skilled in the art, this disclosure may have various modifications and changes. Any modification, equivalent replacement, and improvement made within the spirit and principle of this disclosure shall be included in the scope of claims of this disclosure.

## Claims

1. A packet transmission method, performed by an access controller (AC) and comprising:
for any first access point (AP) in a plurality of APs under the management of the AC, sending radio frequency information of a neighbor AP of the first AP to the first AP such that the first AP broadcasts a beacon packet carrying the radio frequency information of the first AP and the radio frequency information of the neighbor AP; wherein the beacon packet is configured to indicate a wireless terminal for accessing the first AP later to establish a first wireless link with the first AP based on the radio frequency information of the first AP, and establish a second wireless link with the neighbor AP based on the radio frequency information of the neighbor AP; wherein the radio frequency information of the first AP is different from the radio frequency information of the neighbor AP;
receiving a first data packet from the first AP and a second data packet from the neighbor AP, wherein the first data packet is sent to the first AP by the wireless terminal based on the first wireless link, and the second data packet is sent to the neighbor AP by the wireless terminal based on the second wireless link; wherein the first data packet and the second data packet carry same load contents; and
sending the first data packet or the second data packet.

2. The method of claim 1, wherein the neighbor AP of the first AP is determined by:
for each AP other than the first AP, in response to a signal strength of the first AP detected by the AP being greater than a signal strength threshold, determining the AP as the neighbor AP of the first AP; or
in response to the signal strength of the first AP detected by the AP being greater than the signal strength threshold and a communication quality of the AP being greater than a communication quality threshold, determining the AP the neighbor AP of the first AP.

3. The method of claim 1, wherein sending the first data packet or the second data packet comprises:
determining a first signal strength of the first data packet, wherein the first signal strength is a signal strength measured when the first AP receives the first data packet through the first wireless link;
determining a second signal strength of the second data packet, wherein the second signal strength is a signal strength measured when the neighbor AP receives the second data packet through the second wireless link; and
in response to the first signal strength being not less than the second signal strength, sending the first data packet; or in response to the first signal strength being less than the second signal strength, sending the second data packet.

4. The method of claim 3, further comprising, after sending the first data packet or the second data packet:
when receiving a response data packet for the first data packet or the second data packet, in response to the first signal strength being not less than the second signal strength, sending the response data packet to the first AP such that the first AP sends the response data packet to the wireless terminal through the first wireless link; or in response to the first signal strength being less than the second signal strength, sending the response data packet to the neighbor AP such that the neighbor AP sends the response data packet to the wireless terminal through the second wireless link.

5. The method of any one of claims 1 to 4, further comprising:
detecting whether the wireless terminal roams from the first AP to a second AP; wherein the second AP is the neighbor AP of the first AP, and the signal strength measured when the second AP receives a data packet from the wireless terminal is greater than the signal strength measured when the first AP receives a data packet from the wireless terminal; and
in response to determining that the wireless terminal roams from the first AP to a second AP, sending radio frequency information of a neighbor AP of the second AP to the second AP such that the second AP broadcasts a beacon packet carrying the radio frequency information of the second AP and the radio frequency information of the neighbor AP.

6. The method of any one of claims 1 to 4, further comprising:
obtaining a link number of established wireless links of the wireless terminal; and
in response to the link number reaching a number threshold, sending a link disconnection packet to an AP corresponding to an earliest-established wireless link such that the AP disconnects the wireless link between the AP and the wireless terminal based on the link disconnection packet, wherein the number threshold is less than or equal to a radio frequency number of the wireless terminal.

7. A packet transmission method, performed by an access point (AP) and comprising:
receiving radio frequency information of a neighbor AP of the AP from an access controller (AC) accessed by the AP;
broadcasting a beacon packet to a wireless terminal, wherein the beacon packet comprises radio frequency information of the AP and the radio frequency information of the neighbor AP; the beacon packet is configured to indicate the wireless terminal for accessing the AP later to establish a first wireless link with the AP based on the radio frequency information of the AP and establish a second wireless link with the neighbor AP based on the radio frequency information of the neighbor AP; wherein the radio frequency information of the AP is different from the radio frequency information of the neighbor AP;
receiving, based on the first wireless link, a first data packet from the wireless terminal;
and
sending the first data packet to the AC.

8. The method of claim 7, further comprising, after receiving the first data packet from the wireless terminal based on the first wireless link:
determining a first signal strength of the first data packet, wherein the first signal strength is a signal strength measured when the AP receives the first data packet through the first wireless link; and
sending the first signal strength to the AC.

9. The method of claim 7 or 8, wherein the beacon packet comprises a multi-link (ML) field,
wherein the ML field represents that the beacon packet carries the radio frequency information of the neighbor AP; the beacon packet comprises a reduced neighbor report (RNR) field, and the RNR field is configured to carry the radio frequency information of the neighbor AP.

10. The method of claim 7 or 8, further comprising:
in response to receiving a link disconnection packet from the AC, disconnecting the first wireless link between the AP and the wireless terminal based on the link disconnection packet; wherein the link disconnection packet is sent when the AC determines a link number of established wireless links of the wireless terminal reaches a number threshold, and the AP is an AP corresponding to an earliest-established wireless link of all the established wireless links.

11. A packet transmission method, performed by a wireless terminal and comprising:
receiving a beacon packet broadcast by a first access point (AP), wherein the beacon packet comprises radio frequency information of the first AP and radio frequency information of a neighbor AP of the first AP;
in response to the wireless terminal being to access the first AP, establishing a first wireless link with the first AP based on the radio frequency information of the first AP;
establishing a second wireless link with the neighbor AP based on the radio frequency information of the neighbor AP; and
sending a first data packet to the first AP through the first wireless link, and sending a second data packet to the neighbor AP through the second wireless link; wherein the first data packet and the second data packet carry same load contents.

12. The method of claim 11, further comprising, in response to the wireless terminal roaming from the first AP to a second AP:
determining whether there is a wireless link between the wireless terminal and the second AP; in response to determining that there is no wireless link between the wireless terminal and the second AP, establishing a wireless link with the second AP based on the radio frequency information of the second AP; wherein the beacon packet broadcast by the second AP comprises the radio frequency information of the second AP; and
determining whether there is a wireless link between the wireless terminal and a neighbor AP of the second AP; in response to determining that there is no wireless link between the wireless terminal and a neighbor AP of the second AP, establishing a wireless link with the neighbor AP based on the radio frequency information of the neighbor AP; wherein the beacon packet broadcast by the second AP comprises the radio frequency information of the neighbor AP of the second AP.

13. The method of claim 11, wherein the beacon packet comprises a multi-link (ML) field,
wherein the ML field represents the beacon packet carries the radio frequency information of the neighbor AP; the beacon packet comprises a reduced neighbor report (RNR) field, and the RNR field is configured to carry the radio frequency information of the neighbor AP.

14. A packet transmission apparatus, applied to an access controller (AC) and comprising:
a sending module, configured to: for any first access point (AP) in a plurality of APs under the management of the AC, send radio frequency information of a neighbor AP of the first AP to the first AP such that the first AP broadcasts a beacon packet carrying the radio frequency information of the first AP and the radio frequency information of the neighbor AP; wherein the beacon packet is configured to indicate a wireless terminal for accessing the first AP later to establish a first wireless link with the first AP based on the radio frequency information of the first AP, and establish a second wireless link with the neighbor AP based on the radio frequency information of the neighbor AP; wherein the radio frequency information of the first AP is different from the radio frequency information of the neighbor AP;
a receiving module, configured to receive a first data packet from the first AP and a second data packet from the neighbor AP, wherein the first data packet is sent to the first AP by the wireless terminal based on the first wireless link, and the second data packet is sent to the neighbor AP by the wireless terminal based on the second wireless link; wherein the first data packet and the second data packet carry same load contents; and
a processing module, configured to send the first data packet or the second data packet.

15. A packet transmission apparatus, applied to an access point (AP) and comprising:
a first receiving module, configured to receive radio frequency information of a neighbor AP of the AP from an access controller (AC) accessed by the AP;
a first sending module, configured to broadcast a beacon packet to a wireless terminal, wherein the beacon packet comprises radio frequency information of the AP and the radio frequency information of the neighbor AP; the beacon packet is configured to indicate the wireless terminal for accessing the AP later to establish a first wireless link with the AP based on the radio frequency information of the AP and establish a second wireless link with the neighbor AP based on the radio frequency information of the neighbor AP; wherein the radio frequency information of the AP is different from the radio frequency information of the neighbor AP;
a second receiving module, configured to receive, based on the first wireless link, a first data packet from the wireless terminal; and
a second sending module, configured to send the first data packet to the AC.

16. A packet transmission apparatus, applied to a wireless terminal and comprising:
a receiving module, configured to receive a beacon packet broadcast by a first access point (AP), wherein the beacon packet comprises radio frequency information of the first AP and radio frequency information of a neighbor AP of the first AP;
an establishing module, configured to: in response to the wireless terminal being to access the first AP, establish a first wireless link with the first AP based on the radio frequency information of the first AP; and establish a second wireless link with the neighbor AP based on the radio frequency information of the neighbor AP; and
a sending module, configured to send a first data packet to the first AP through the first wireless link, and send a second data packet to the neighbor AP through the second wireless link; wherein the first data packet and the second data packet carry same load contents.

17. An electronic device, comprising a processor and a memory storing instructions executable by the processor, wherein the instructions, when executed by the processor, cause the processor to perform the packet transmission method of any one of claims 1 to 6, claims 7 to 10, or claims 11 to 13.
